Europäisches Patentamt

European Patent Office

Office européen des brevets

(11) Veröffentlichungsnummer: **0 220 527**
**A1**

## (12) EUROPÄISCHE PATENTANMELDUNG

(21) Anmeldenummer: 86113600.0

(22) Anmeldetag: 02.10.86

(51) Int. Cl.⁴: **F16H 23/08 , A01D 34/30**

(30) Priorität: 19.10.85 DE 3537245

(43) Veröffentlichungstag der Anmeldung:
06.05.87 Patentblatt 87/19

(84) Benannte Vertragsstaaten:
BE DE FR IT

(71) Anmelder: INA Wälzlager Schaeffler KG
Industriestrasse 1-3 Postfach 1220
D-8522 Herzogenaurach(DE)

(72) Erfinder: Stamm, Wolfgang, Dipl.-Ing. (TH)
Schmitt-Weg 25
D-6100 Darmstadt(DE)
Erfinder: Stoll, Klaus
Franzensbaderstrasse 5
D-8552 Höchstadt(DE)
Erfinder: Bucher, Karl
Weilburger Weg 17
D-6050 Offenbach(DE)
Erfinder: Bachmann, Otto
Hofgut Neuhof
D-6676 Mandelbachtal(DE)

(74) Vertreter: Klug, Horst, Dipl.-Ing. (FH)
c/o INA Wälzlager Schaeffler KG Postfach 12
20
D-8522 Herzogenaurach(DE)

(54) Antriebsvorrichtung für seitlich hin- und herbewegte Messerbänder an Mäheinrichtungen landwirtschaftlicher Erntemaschinen.

(57) Bei einer Antriebsvorrichtung für seitlich hin- und herbewegte Messerbänder an Mäheinrichtungen landwirtschaftlicher Erntemaschinen, die aus einem Taumelgetriebe besteht, bei dem zu einem in einer Gehäusewand (1) gelagerten ersten Wälzlager (4), dessen Innenring (7) durch ein Antriebsrad (8) angetrieben ist ein zweites Wälzlager (11) in geneigter Lage angeordnet ist, dessen Innenring (9) in Verbindung mit dem Innenring (7) des ersten Wälzlagers - (4) steht, und dessen Außenring (10) einen hebelartigen Fortsatz (17) aufweist, der unmittelbar oder mittelbar gelenkig mit dem Messerband verbunden ist, wird eine besonders geringe axiale Baulänge dadurch erreicht, daß die Innenringe (7, 9) der beiden Wälzlager (4, 11) und die Nabe des Antriebsrades (8) unmittelbar aneinandergrenzen und direkt, z. B. mittels Schrauben (13) miteinander verbunden sind.

## Antriebsvorrichtung für seitlich hin-und herbewegte Messerbänder an Mäheinrichtungen landwirtschaftlicher Erntemaschinen

Die Erfindung betrifft eine Antriebsvorrichtung für seitlich hin-und herbewegte Messerbänder an Mäheinrichtungen landwirtschaftlicher Erntemaschinen, die aus einem Taumelgetriebe besteht, bei dem zu einem in einer Gehäusewand gelagerten ersten Wälzlager, dessen Innenring durch ein Antriebsrad angetrieben ist, ein zweites Wälzlager in geneigter Lage angeordnet ist, dessen Innenring in Verbindung mit dem Innenring des ersten Wälzlagers steht, und dessen Außenring einen heberlartigen Fortsatz aufweist, der unmittelbar oder mittelbar gelenkig mit dem Messerband verbunden ist.

Bei einer derartigen bekannten Antriebsvorrichtung sind die beiden Wälzlager als zweireihige Schrägkugellager ausgebildet, die ebenso wie das Antriebsrad auf einer gemeinsamen Welle angeordnet sind, welche zwischen den beiden Wälzlagern in der Weise abgekröpft ist, daß das zweite Wälzlager eine geneigte Lage gegenüber dem ersten Wälzlager einnimmt. Diese Antriebsvorrichtung weist eine beachtliche Länge auf und ist deshalb nicht anwendbar, wenn sich die Mäheinrichtung an der Frontseite der Erntemaschine befindet, wie dies beispielsweise bei Mähdreschern der Fall ist. Da sich bei diesen Maschinen die Mäheinrichtung praktisch über die gesamte Fahrzeugbreite erstreckt, ist es notwendig, für das Messerband eine Antriebsvorrichtung einzusetzen, die in Fahrzeugquerrichtung extrem klein baut (FR-PS 22 62 753).

Der vorliegenden Erfindung liegt die Aufgabe zugrunde, eine Antriebsvorrichtung für derartige Mäheinrichtungen zu schaffen, die bei geringstem Konstruktions-und Herstellungsaufwand in Fahrzeugquerrichtung äußerst geringe Abmessungen aufweist und die zudem mit äußerst geringem Aufwand repariert werden kann.

Diese Aufgabe wird nach der Erfindung dadurch gelöst, daß die Innenringe der beiden Wälzlager und die Nabe des Antriebsrades unmittelbar aneinandergrenzen und direkt, z. B. mittels Schrauben miteinander verbunden sind. Auf diese Weise wird erreicht, daß die drei Bauteile, welche die Antriebsvorrichtung bilden, den kleinsten axialen Abstand voneinander aufweisen. Gleichzeitig wird erreicht, daß die bei der bekannten Vorrichtung erforderliche Welle entfällt, wodurch die Vorrichtung einfacher und damit billiger wird. Auch bei eventuell erforderlich werdenden Reparaturen sinkt dadurch der Aufwand.

Eine deutliche Verkürzung der axialen Baulänge kann außerdem dadurch erreicht werden, daß jedes der beiden Wälzlager nur eine einzige Reihe von Wälzkörpern aufweist, die in der Lage sind, die auftretenden Radial-und Axialkräfte, sowie Momente aufzunehmen. Derartige Lager können z. B. Vierpunktkugellager, oder auch Kreuzrollenlager sein.

Eine einfache Gestaltung ergibt sich dadurch, daß der Innenring des zweiten Wälzlagers auf einer Seite über den Außenring hinaus verlängert ist und in einer geneigt zur Lagerlängsachse verlaufenden Stirnfläche endet, mit der er gegen die plane Stirnfläche des Innenringes des ersten Wälzlagers anliegt und mit diesem durch Schrauben verbunden ist.

Eine besonders wirtschaftliche Ausführung kann dadurch erzielt werden, daß die Innenringe beider Wälzlager identisch ausgebildet sind und die Neigung der Stirnfläche eines jeden Lagers der Hälfte des Winkelbetrages entspricht, den beide Wälzlager miteinander einschließen.

Zur weiteren Vereinfachung der Konstruktion kann gegen die zweite plane Stirnfläche des Innenringes des ersten Wälzlagers das Antriebsrad anliegen, wobei zu seiner Befestigung Schrauben vorgesehen sind, die es selbst, sowie den Innenring des ersten Wälzlagers durchdringen und in Gewindebohrungen des Innenringes des zweiten Wälzlagers eingeschraubt sind. Auf diese Weise wird durch ein und dieselben Schrauben eine Baueinheit aus dem ersten Wälzlager, dem zweiten Wälzlager und dem Antriebsrad geschaffen.

Das Antriebsrad selbst kann in zweckmäßiger Weise als Keilriemenscheibe ausgebildet sein, wodurch sich problemlos das benötigte Drehmoment auf die Antriebsvorrichtung übertragen läßt.

Der Außenring des zweiten Wälzlagers kann von einem Ring umgeben sein, der einseitig durch einen Boden abgeschlossen ist, und der an einer Umfangsstelle einen annähernd radial verlaufenden hebelartigen Fortsatz aufweist, der seinerseits am Ende einen Kugelkopf trägt, der geeignet ist, mit einem hohlkugelförmigen Kupplungsteil eines Messerbandes zusammenzuwirken. Dieser Ring kann mittels Schrauben mit dem Außenring des zweiten Wälzlagers verbunden sein, die durch Bohrungen des geschlossenen Bodens hindurchgreifen und in Gewindebohrungen des Außenringes eingeschraubt sind.

Da die einzelnen Bauteile der Antriebsvorrichtung ausschließlich durch Schrauben miteinander verbunden sind, ist gewährleistet, daß diese in einfacher Weise insbesondere auch mit einfachsten Werkzeugen montiert und demontiert werden können, was insbesondere im Fall einer Reparatur sich sehr zeitsparend auswirkt.

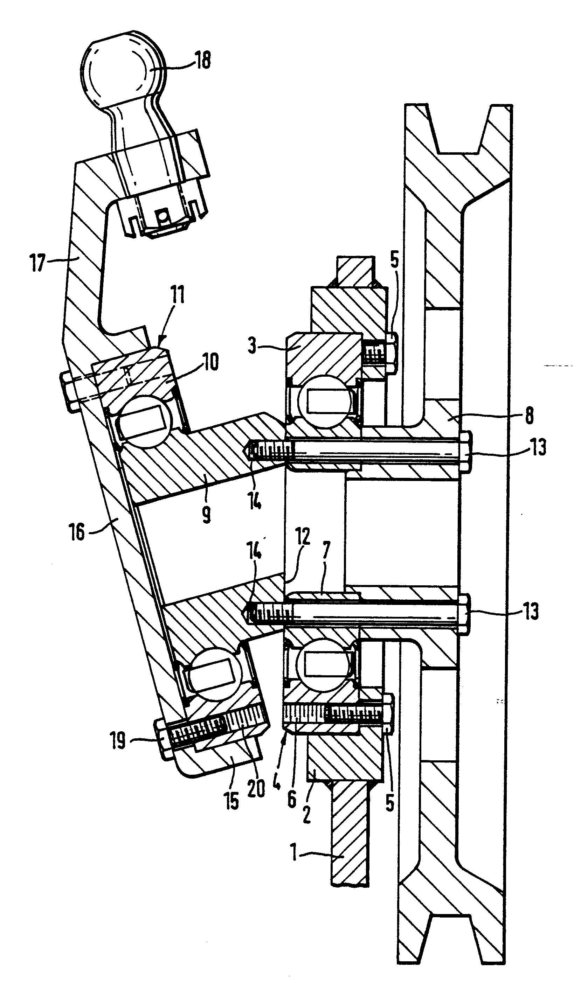

In der Zeichnung ist ein Ausführungsbeispiel der Erfindung im Längsschnitt dargestellt.

In eine Ausnehmung in einer Gehäusewand 1 ist ein winkelförmiger Tragring 2 eingesetzt und verschweißt, der seinerseits den Außenring 3 eines ersten Wälzlagers 4 aufnimmt. Dieses Wälzlager 4 ist mittels Schrauben 5, die in Gewindebohrungen 6 des Außenringes 3 eingreifen, mit dem Tragring 2 verbunden.

Gegen die planen Stirnflächen des Innenringes 7 des ersten Wälzlagers 4 liegt auf der einen Seite die Nabe eines Antriebsrades 8 an, welches als Keilriemenscheibe ausgebildet ist, während gegen die andere Stirnfläche des Innenringes 7 der Innenring 9 eines zweiten Wälzlagers anliegt, wobei dieser Innenring 9 auf der einen Seite über den Außenring 10 des zweiten Wälzlagers 11 hinaus verlängert ist und in einer zu seiner Lagerlängsachse geneigten Stirnfläche 12 endet.

Das erste Wälzlager 4, das zweite Wälzlager 11 und das Antriebsrad 8 werden gemeinsam durch Schrauben 13 miteinander verbunden, welche Bohrungen des Antriebsrades 8 und des Innenringes 7 durchdringen und in Gewindebohrungen 14 des Innenringes 9 eingeschraubt sind und dabei diese drei Bauteile gegeneinander verspannen.

Der Außenring 10 des zweiten Wälzlagers 11 ist von einem Ring 15 umgeben, der auf seiner einen Seite den geschlossenen Boden 16 aufweist. An einer Umfangsstelle weist dieser Ring den annähernd radial verlaufenden hebelartigen Fortsatz 17 auf, der an seinem Ende den Kugelkopf 18 trägt. Dieser ist so dimensioniert und ausgebildet, daß er geeignet ist, mit einem üblichen, hohlkugelförmigen Kupplungsteil eines Messerbandes unmittelbar zusammenzuwirken und damit dieses Messerband in eine hin-und hergehende Bewegung zu versetzen, wenn das Antriebsrad 8 in Rotation versetzt wird.

Der Ring 15 ist mittels der Schrauben 19, die den Boden 16 durchdringen und in die Gewindebohrungen 20 des Außenringes 10 eingreifen, mit diesem Außenring verbunden.

Die beiden Wälzlager 4 und 11 sind als Vierpunktkugellager ausgebildet und mit ausreichenden, an sich bekannten Abdichtungen versehen. Es können auch -in nicht dargestellter Weise -geeignete Schmiervorrichtungen zum Nachschmieren der Wälzlager vorgesehen werden.

## Ansprüche

1. Antriebsvorrichtung für seitlich hin-und herbewegte Messerbänder an Mäheinrichtungen landwirtschaftlicher Erntemaschinen, die aus einem Taumelgetriebe besteht, bei dem zu einem in einer Gehäusewand gelagerten ersten Wälzlager, dessen Innenring durch ein Antriebsrad angetrieben ist, ein zweites Wälzlager in geneigter Lage angeordnet ist, dessen Innenring in Verbindung mit dem Innenring des ersten Wälzlagers steht, und dessen Außenring einen hebelartigen Fortsatz aufweist, der unmittelbar oder mittelbar gelenkig mit dem Messerband verbunden ist, **dadurch gekennzeichnet**, daß die Innenringe (7, 9) der beiden Wälzlager (4, 11) und die Nabe des Antriebsrades (8) unmittelbar aneinandergrenzen und direkt, z.B. mittels Schrauben (13) miteinander verbunden sind.

2. Antriebsvorrichtung nach Anspruch 1, **dadurch gekennzeichnet**, daß jedes der beiden Wälzlager (4, 11) nur eine einzige Reihe von Wälzkörpern aufweist, die in der Lage sind, die auftretenden Radial-und Axialkräfte, sowie Momente aufzunehmen.

3. Antriebsvorrichtung nach Anspruch 2, **dadurch gekennzeichnet**, daß wenigstens eines der Wälzlager (4, 11) als Vierpunktkugellager ausgebildet ist.

4. Antriebsvorrichtung nach Anspruch 2, **dadurch gekennzeichnet**, daß wenigstens eines der Wälzlager (4,11) als Kreuzrollenlager ausgebildet ist.

5. Antriebsvorrichtung nach einem der Ansprüche 1 bis 4, **dadurch gekennzeichnet**, daß der Innenring (9) wenigstens eines der Wälzlager (11) auf einer Seite über den Außenring (10) hinaus verlängert ist und in einer geneigt zur Lagerlängsachse verlaufenden Stirnfläche (12) endet.

6. Antriebsvorrichtung nach Anspruch 5, **dadurch gekennzeichnet**, daß die Innenringe (7, 9) beider Wälzlager (4, 11) identisch ausgebildet sind und die Neigung der Stirnfläche eines jeden Lagers der Hälfte des Winkelbetrages entspricht, den beide Wälzlager miteinander einschließen.

7. Antriebsvorrichtung nach einem der Ansprüche 1 bis 6, **dadurch gekennzeichnet**, daß gegen die zweite plane Stirnfläche des Innenringes (7) des ersten Wälzlagers (4) das Antriebsrad (8) anliegt, wobei zu seiner Befestigung Schrauben - (13) vorgesehen sind, die es selbst, sowie den Innenring (7) des ersten Wälzlagers (4) durchdringen und in Gewindebohrungen (14) des Innenringes (9) des zweiten Wälzlagers (11) eingeschraubt sind und dabei diese drei Bauteile gegeneinander verspannen.

8. Antriebsvorrichtung nach Anspruch 1 oder 7, **dadurch gekennzeichnet**, daß das Antriebsrad - (8) als Keilriemenscheibe ausgebildet ist.

9. Antriebsvorrichtung nach Anspruch 1, **dadurch gekennzeichnet**, daß der Außenring - (10) des zweiten Wälzlagers (11) von einem mit einem einseitig geschlossenen Boden (16) versehenen Ring (15) umgeben ist, der an einer Umfangsstelle einen annähernd radial verlaufenden hebelartigen Fortsatz (17) aufweist, der seinerseits am Ende einen Kugelkopf (18) trägt, der geeignet ist, mit einem hohlkugelförmigen Kupplungsteil eines Messerbandes zusammenzuwirken.

10. Antriebsvorrichtung nach Anspruch 9, **dadurch gekennzeichnet**, daß der Ring (15) mittels Schrauben (19) mit dem Außenring (10) des zweiten Wälzlagers (11) verbunden ist, die durch Bohrungen des geschlossenen Bodens (16) hindurchgreifen, und in Gewindebohrungen (20) des Außenringes (10) eingeschraubt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | FR-A-2 262 753 (BEJEANNIN) <br> * Insgesamt * | 1,7,8 | F 16 H 23/08 <br> A 01 D 34/30 |
| A | FR-A-1 258 266 (BRAUD) <br> * Insgesamt * | 1,2,8 | |
| A | DE-C- 971 561 (STOCKEY & SCHMITZ) <br> * Figur 5 * | 9,10 | |
| A | FR-A- 901 823 (CASTOLDI) | | |
| A | US-A-2 297 317 (PARADISE) | | |
| A | DE-U-7 133 740 (FAHR) | | RECHERCHIERTE SACHGEBIETE (Int. Cl.4) <br><br> A 01 D <br> F 16 H |
| A | FR-A-1 298 358 (McCORMICK) | | |
| A | CH-A- 289 160 (STREIT) | | |
| A | FR-A-2 136 946 (PNEUMO DYNAMICS CORPORATION) | | |

Der vorliegende Recherchenbericht wurde für alle Patentansprüche erstellt.

| Recherchenort <br> DEN HAAG | Abschlußdatum der Recherche <br> 21-01-1987 | Prüfer <br> DE LAMEILLIEURE D. |
|---|---|---|